# NEUE EUROPÄISCHE PATENTSCHRIFT

(11) **EP 0 575 886 B2**
(45) Veröffentlichungstag und Bekanntmachung des Hinweises auf die Entscheidung über den Einspruch: **09.04.2003**
(45) Hinweis auf die Patenterteilung: 12.03.1997
(21) Anmeldenummer: 93109651.5
(22) Anmeldetag: 16.06.1993
(51) Int. Cl.: C04B 16/06, C04B 38/04, C04B 20/10

(54) **Gegen Abplatzungen bei Brandbeanspruchung beständiger Beton oder Mörtel**
Non-flaking fire resistant concrete or mortar
Béton ou mortier résistant à l'éclatement provoqué par le feu

(30) Priorität: 20.06.1992 DE 4220274
(43) Veröffentlichungstag der Anmeldung: 29.12.1993
(73) Patentinhaber: Jaklin, Hans, D-54293 Trier (DE)
(72) Erfinder: Jaklin, Hans, D-54293 Trier (DE)
(74) Vertreter: Eggert, Hans-Gunther, Dr.

(56) Entgegenhaltungen:
- EP-A- 0 347 092
- EP-A- 0 441 296
- EP-B- 0 264 540
- EP-B- 0 264 541
- FR-A- 2 518 082
- GB-A- 2 170 234
- US-A- 3 933 515
- DATABASE WPI Week 8908, Derwent Publications Ltd., London, GB; AN 89-059523 & SE-A-8 701 395 (A . MILLER)
- CHEMICAL ABSTRACTS, vol. 103, no. 22, 2. Dezember 1985, Columbus, Ohio, US; abstract no. 182730p, Y. OHAMA ET AL. Seite 296 ; & PROC. JPN. CONGR. MATER. RES., 1985 Seiten 145 - 150
- CHEMICAL ABSTRACTS, vol. 108, no. 18, 2. Mai 1988, Columbus, Ohio, US; abstract no. 155513s, J. KONDO ET AL. Seite 328 ; & JP-A-62 270 472 (ID.)

## Beschreibung

Betone nach DIN 1045 oder Eurocode 2 oder ACI 318-89 werden nach ihrer Rohdichte unterschieden: Leichtbeton, Normalbeton und Schwerbeton. Diese Betone werden im wesentlichen aus Bindemitteln - im allgemeinen Zement nach DIN 1164 - Betonzuschlag gemäß Anforderungen nach DIN 4226 (Teil 1 bis 3) und Wasser hergestellt. Zusätzlich werden häufig Betonzusatzmittel und Zusatzstoffe verwendet. Erstere ändern durch chemische und/oder physikalische Wirkung Betoneigenschaften, z.B. Erhärtung, Verarbeitbarkeit oder Erstarren. Zusatzstoffe sind dagegen fein aufgeteilte Zusätze, die bestimmte Betoneigenschaften beeinflussen und im Gegensatz zu den Betonzusatzmitteln bei der Mischungsberechnung als Volumenanteile zu berücksichtigen sind, z.B. latent hydraulische Stoffe oder Körperfarben, die auch organischen Ursprungs sein können.

Aus Beton hergestellte Bauteile und Bauwerke - Stahlbetonbauteile oder Spannbetonbauteile - müssen eine Reihe von Anforderungen hinsichtlich Tragfähigkeit und Standsicherheit erfüllen. Bei ihrer Bemessung und Herstellung sind die einschlägigen Normen (u.a. DIN 1045 bzw. DIN 4227) sowie die Landesbauordnungen zu beachten.

Betonbauteile und Bauwerke müssen aber auch eine Reihe von Anforderungen hinsichtlich des baulichen Brandschutzes erfüllen. Maßgeblich hierfür sind ebenfalls die Landesbauordnungen und insbesondere die DIN 4102.

Unter Brandbeanspruchung verliert der Beton an Festigkeit und die Bauteile versagen nach einer gewissen Beanspruchungsdauer. Nach dem Beton-Brandschutz-Handbuch von K. Kordina und C. Meyer-Ottens, Betonverlag GmbH, Düsseldorf 1981, Seiten 152 bis 167, werden bei brandbeanspruchten Stahlbetonbauteilen insbesondere folgende Versagensarten unterschieden: Versagen der Zugzone, Versagen durch Schub- oder Torsionsbruch, Versagen der Druckzone, Versagen durch Überschreiten der zulässigen Temperaturerhöhung auf der dem Feuer abgekehrten Seite und Versagen durch Abplatzungen.

Zerstörenden Abplatzungen konnte bei normalfesten Betonbauteilen durch entsprechende Wahl der Abmessungen, Querschnittformen, Druckspannungshöhen und Bewehrungsanordnung in Verbindung mit ihrer langjährigen Trocknung im Bauwerk entgegengewirkt werden.

Bei Bauteilen aus hochfesten Betonen sind explosionsartige Abplatzungen bei Brandbeanspruchung nach den bisherigen Erfahrungen der Praxis und der Materialprüfung stets aufgetreten. Unter hochfesten Betonen versteht man solche, die hinsichtlich ihrer Festigkeit über die in der DIN 1045 erfaßte höchste Festigkeitsklasse B 55 hinausgehen, z.B. einen B 85. Um die erforderliche hohe Festigkeit des Zementsteins zu erreichen, werden hochfeste Betone mit einem sehr geringen Wasser/Zement-Wert von im allgemeinen unter 0,40 hergestellt. Solche Betone sind für flüssiges Wasser undurchlässig und die Diffusion von Wasserdampf erfolgt sehr langsam und ist gleichgewichtsabhängig. In Abhängigkeit von den Umgebungsbedingungen, insbesondere von der relativen Luftfeuchte, stellt sich im Beton ein Feuchtegleichgewicht ein, so daß der Beton in der Regel mehr als 3 Gew.-% Wasser enthält. D.h., Bauteile aus solchem Beton können unter normalen Umgebungsbedingungen nie vollständig (≤ 2 Gew.-%) austrocknen.

Wegen des vorhandenen hohen Feuchtigkeitsgehalts und des hohen Diffusionswiderstands für Wasserdampf entstehen bei Brandbeanspruchung im Inneren der hochfesten Betonbauteile zwangsläufig sehr hohe Drücke, was schließlich zu explosiven Abplatzungen führt, insbesondere wenn der Beton gleichzeitig hohen mechanischen Spannungen ausgesetzt ist.

Abplatzungen bei Brandbeanspruchung sind generell bei Bauteilen beobachtet worden, deren Eigenfeuchtigkeit und Dichtigkeit gewisse Grenzen überschreitet, beispielsweise ≥ 2 % bei normalfestem Beton. Sie treten auch bei Bauteilen aus Spritzbeton (gemäß DIN 18551), oder Schleuderbeton, Leichtbeton mit geschlossenem Gefüge und Spritzmörtel auf.

Dadurch sind der Anwendung dieser Baumaterialien, insbesondere der von hochfestem Beton, sehr enge Anwendungsgrenzen gesetzt bzw. es sind aufwendige technische Maßnahmen, wie beispielsweise eine äußere Netzbewehrung zur Verhinderung des Abfallens der gelösten oder abgeplatzten Betonschale oder aufwendige Isolierungen gegen das schnelle Eindringen von Hitze im Brandfall erforderlich. Auch die Zugabe von Stahlfasern zur Erhöhung der Betonzugfestigkeit brachte nicht den gewünschten Erfolg.

So beschreibt die schwedische Auslegeschrift 460 118, die von der schwedischen Patentschrift 381 452 ausgeht, ein Verfahren zur Herstellung von Stahlfaserbeton, demzufolge die Fasern in der noch nicht gehärteten Betonmasse durch Einwirkung eines magnetischen Kraftfeldes unter gleichzeitigem Rütteln in der Masse bewegt und vorzugsweise orientiert werden. Beim Sedimentieren nehmen die Fasern nicht immer die angestrebte Lage ein, was auf Kosten der Betonqualität geht. Um das Sedimentieren der Fasern zu verhindern, werden die speziellen Stahlfasern mit wesentlich dünneren Kunstharzfasern vermischt.

Der Erfindung liegt die Aufgabe zugrunde, bei Bauteilen aus hochfesten Betonen, insbesondere Stahlbetonbauteilen, das destruktive Abplatzen unter Brandbeanspruchung zu verhindern.

Dies geschieht erfindungsgemäß dadurch, daß Stahlbetonbauteile aus hochfesten Betonen mit einer über die in der DIN 1045 erfaßten höchsten Festigkeitsklasse B 55 hinausgehenden Festigkeit bereitgestellt werden, die 2 bis 6 Gew.-%, bezogen auf ihren Zementanteil, einer feinteiligen amorphen Kieselsäure mit mindestes 90 Gew.-% SiO₂ oder eines feinteiligen, gefällten aktiven Silikats des Magnesiums, Calciums, Bariums oder Aluminiums mit einer BET-Oberfläche von 50 bis 200 m²/g und einem d_{50%}-Wert unter 20 µm sowie 0,1 bis 0,3 Vol.-% Polyolefinfasern, die durch Auflösen, Erweichen, Schrumpfen, Zersetzen oder Schmelzen ein Kapillarsystem mit im wesentlichen linearen Kapillaren von 10 bis 100 µm Durchmesser und 5 bis 35 mm Länge ausbilden können, enthalten.

Indem man der Betonmischung neben den Fasern noch zusätzlich 2 bis 6 Gew.-%, bezogen auf den Zementanteil, einer feinteiligen amorphen Kieselsäure mit mindestens 90 Gew.-% SiO₂ oder eines feinteiligen, gefällten, aktiven Silikats des Magnesiums, Calciums, Bariums oder Aluminiums mit einer BET-Oberfläche von 50 - 200 m²/g und einem d_{50%}-Wert unter 20 um zugefügt, wird das Abplatzen bei Brandbeanspruchung überraschenderweise bis auf null Ausbrüche verringert.

Dieses Ergebnis ist deshalb unerwartet, weil bekannt ist, daß die Dosierung von aktiver Kieselsäure oder von aktiven Silikaten der genannten Metallionen den Beton dichter gegen das Eindringen von Flüssigkeiten und Gasen machen. Die Ursachen für die Eigenschaftsverbesserung des Betons auch bei der Brandbeanspruchung sind nicht bekannt bzw. können nicht exakt erklärt werden.

Die Verbesserung des Brandverhaltens durch die feinteilige Kieselsäure und/oder die Silikate - im Zusammenwirken mit den Fasern - kann mit einiger Wahrscheinlichkeit durch die Homogenisierung des Betonaufbaus gedeutet werden.

Dieses Kapillarporensystem entsteht es erst unter den Bedingungen der Brandbeanspruchung. Das geschicht mit Fasern, die die Kapillaren durch Auflösen, Erweichen, Schrumpfen, Zersetzen oder Schmelzen ausbilden und hinsichtlich ihrer Gestalt, d.h. Durchmesser und Länge, sowie der eingebrachten Menge den gewünschten Kapillaren entsprechen. Die Fasern sind organischer Natur. Im Brandfall kann das im Beton gespeicherte, physikalisch gebundene und partiell auch chemisch gebundene Wasser rechtzeitig ausströmen, so daß sich kein Wasserdampfdruck ausbilden kann, der sonst zu den bekannten Abplatzungen führt. Die bisher unüberwindlich erscheinenden Anwendungsgrenzen für hochfesten Beton werden damit aufgehoben.

Organische Fasern, die die gewünschten Kapillaren im Brandfall ausbilden können, bestehen aus einem Material, das bei Temperaturen ab 100 °C, insbesondere im Temperaturbereich von 150 bis 300 °C erweicht, schmilzt oder zersetzt wird, nämlich aus Polyolefinen, wie Polyethylen oder Polypropylen.

Für die Zwecke der Erfindung geeignete Fasern haben einen Durchmesser von 10 bis 100 µm. Ihre Länge beträgt vorteilhalt 5 bis 35 mm, insbesondere 8 bis 20 mm. Der Gehalt der Fasern beträgt etwa 1 bis 5 kg/m³ Beton bzw. 0,1 bis 0.3 Vol.-%, bezogen auf das Volumen des Betons.

Auch die bestimmungsgemäße Verwendung der beschriebenen Betone zur Verhinderung des destruktiven Abplatzens bei Brandbeanspruchung, insbesondere über der Stahlbewehrung, ist Gegenstand dieser Erfindung.

### Beispiel

Es wurden drei Betonmischungen gemäß der nachstehenden Tabelle auf der Basis von PZ 55 F, Sand, Kies und Basaltedelsplitt hergestellt.

| Betonrezeptur | | I | II | III |
|---|---|---|---|---|
| Zement (PZ 55-F) | kg/m₃ | 460 | 460 | 465 |
| Silikatstaubdispersion (70 kg Dispersion = 35 kg Feststoff) | kg/m₃ | 70 | 70 | --- |
| gefällte feindisperse Kieselsäure (BAGRAT KS 300) | kg/m₃ | --- | --- | 14,0 |
| Sand 0/2 mm | kg/m₃ | 735 | 735 | 745 |

| Betonrezeptur | | I | II | III |
|---|---|---|---|---|
| Kies 2/8 mm | kg/m₃ | 205 | 205 | 205 |
| Basaltsplitt 8/16 mm | kg/m₃ | 880 | 880 | 890 |
| Wasser | l/m₃ | 153 | 153 | 145 |
| Fließmittel (FM72 Sicotan) | kg/m₃ | 27,6 | 27,6 | 28,0 |
| Polypropylenfasern (Ø 100 µm, 1 = 12 mm) | kg/m₃ | 4,0 | --- | 4,0 |
| Schmelzintervall 160-170 °C | | | | |
| Wasser/Zement + 2xSilikastaub | | 0,35 | 0,35 | 0,35 |

Aus den Mischungen wurden jeweils drei Stützenabschnitte (25 x 25 x 100 cm³; bewehrt mit acht Betonstählen Ø 18 mm; Bügel Ø 8 cm, e = 15 cm; Betondeckung nom C_{B} = 2,5 cm) sowie jeweils sechs Würfel hergestellt, 28 Tage durch Auflegen feuchter Tücher nachbehandelt und anschließend bei ca. 65 % relativer Feuchte und 20 °C bis zu den jeweiligen Prüfungen gelagert. Die Würfelfestigkeiten nach 28 Tagen lagen zwischen 90 und 105 N/mm².

Insgesamt wurden vier Stützenabschnitte im Alter von etwa drei Monaten mit folgenden Belastungen unter Brandbeanspruchung nach der Einheitstemperaturkurve (ETK) gemäß DIN 4102 Teil 2, Ausg. 09/77, geprüft:
- Probekörper 1, Mischung III, zentrische Belastung mit 2000 kN
- Probekörper 2, Mischung I, zentrische Belastung mit 2000 kN
- Probekörper 3, Mischung II, zentrische Belastung mit 2000 kN
- Probekörper 4, Mischung III, exzentrische Belastung (e = d/6,25) mit 1200 kN.

Die Probe 1 aus der Mischung III, d.h. mit Zusatz von gefällter, feindisperser Kieselsäure und den Polypropylenfasern, und die Probe 2 aus der Mischung I mit Silikastaub und den Polypropylenfasern hielten der zweistündigen Brandbeanspruchung stand, ohne daß größere Verformungen, Risse oder Ausknicken der Längsbewehrungsstähle festzustellen waren. Probe 1 zeigte keinerlei Abplatzungen. Bei Probe 2 traten an der bei der Herstellung oben liegenden und durch Abreiben geglätteten Oberfläche zwischen der 6. und 15. Minute an zwei Stellen Abplatzungen auf, die jedoch nur etwa 5 mm tief reichten.

Bei der Probe 3 aus der Mischung II, die bis auf den fehlenden Zusatz der Polypropylenfasern mit der Mischung I übereinstimmte, traten, beginnend ab der 6. Minute, gravierende Abplatzungen auf, nach denen auch Bügel und Längsstäbe freilagen; der Versuch wurde daraufhin nach 45 Minuten abgebrochen.

Bei Probe 4 aus der Mischung III traten keinerlei Abplatzungen auf. Auch unter exzentrischer Belastung, die nach 65 Minuten auf die mit der Versuchsanlage maximal erreichbare Belastung gesteigert wurde, trat bis zur 105. Minute kein Versagen der Probe auf. - Der Versuch mußte dann wegen Überhitzung des Prüfrahmens abgebrochen werden.

Die Untersuchungen wurden mit der Bestimmung der Restfestigkeit an den Proben 1, 2 und 4 rund 14 Tage nach den entsprechenden Brandversuchen abgeschlossen. Die dabei ermittelten Restfestigkeiten betrugen:
- Probe 1: 2740 kN (zentrische Belastung)
- Probe 2: 2900 kN (zentrische Belastung)
- Probe 4: 1720 kN (exzentrische Belastung)

Die Stützenabschnitte aus den Mischungen I und III zeigten keinerlei Abplatzungen, obwohl ihre Betonfeuchtigkeit, ebenso wie bei den Stützenabschnitten aus der Mischung II, gemessen an gleichzeitig hergestellten und gleichzeitig gelagerten Vergleichskörpern, zwischen 4,2 und 4,4 Masse-%, bezogen auf die Masse des Betons, betrug. Für die Stützen aus dem Faserbeton, ggf. unter Zusatz der feindispersen Kieselsäure, war ohne Einschränkung eine Einstufung in die Feuerwiderstandsklasse F 120-A möglich.

Wahrscheinlich lassen sich die Stützen der Feuerwiderstandsklasse F 180-A zuordnen. Diese Einstufung scheiterte nur daran, daß die Versuche wegen Überhitzung des Prüfrahmens abgebrochen werden mußten.

## Patentansprüche

1. Gegen Abplatzungen bei Brandbeanspruchung beständige Stahlbetonbauteile aus hochfesten Betonen mit einer über die in der DIN 1045 erfaßten höchsten Festigkeitsklasse B 55 hinausgehenden Festigkeit, wobei sie
- 2 bis 6 Gew.-%, bezogen auf ihren Zementanteil, einer feinteiligen amorphen Kieselsäure mit mindestes 90 Gew.-% SiO₂ oder eines feinteiligen, gefällten aktiven Silikats des Magnesiums, Calciums, Bariums oder Aluminiums mit einer BET-Oberfläche von 50 bis 200 m²/g und einem d_{50%}-Wert unter 20 µm sowie
- 0,1 bis 0,3 Vol.-% Polyolefinfasern, die durch Auflösen, Erweichen, Schrumpfen, Zersetzen oder Schmelzen ein Kapillarsystem mit im wesentlichen linearen Kapillaren von 10 bis 100 µm Durchmesser und 5 bis 35 mm Länge ausbilden können,
enthalten.

2. Stahlbetonbauteile nach Anspruch 1, **dadurch gekennzeichnet, daß** die Fasern bei Temperaturen ab 100 °C, insbesondere im Temperaturbereich von 150 bis 300 °C, erweichen, schmelzen oder zersetzt werden.

3. Stahlbetonbauteile nach Anspruch 1 oder 2, **dadurch gekennzeichnet, daß** die Fasern eine Länge von 8 bis 20 mm haben.

4. Verwendung eines hochfesten Betons mit einer über die in der DIN 1045 erfaßten höchsten Festigkeitsklasse B 55 hinausgehenden Festigkeit zur Verhinderung des destruktiven Abplatzens bei Brandbeanspruchung, insbesondere über der Bewehrung, wobei er
- 2 bis 6 Gew.-%, bezogen auf seinen Zementanteil, einer feinteiligen amorphen Kieselsäure mit mindestens 90 Gew.-% SiO₂ oder eines feinteiligen, gefällten aktiven Silikats des Magnesiums, Calciums, Bariums oder Aluminiums mit einer BET-Oberfläche von 50 bis 200 m²/g und einem d_{50%}-Wert unter 20 µm sowie
- 0,1 bis 0,3 Vol.-% Polyolefinfasern, die durch Auflösen, Erweichen, Schrumpfen, Zersetzen oder Schmelzen ein Kapillarsystem mit im wesentlichen linearen Kapillaren von 10 bis 100 µm Durchmesser und 5 bis 35 mm Länge ausbilden können,
enthält.

## Claims

1. Reinforced concrete components which are resistant to flaking in the event of fire and which are made of high-strength concretes having a strength that goes beyond the maximum strength category B 55 covered in DIN 1045, wherein said reinforced concrete components contain:
- 2 to 6 % by weight, relative to their cement content, of a finely-divided, amorphous silicic acid having at least 90 % by weight SiO₂ or of a finely-divided, precipitated active silicate of magnesium, calcium, barium or aluminium having a BET surface area of 50 to 200 m²/g and a d_{50%} value of less than 20 µm; and
- 0.1 to 0.3 % by volume polyolefin fibres capable of forming a capillary system by dissolving, softening, shrinking, decomposing or melting, said capillary system having substantially linear capillaries of 10 to 100 µm in diameter and 5 to 35 mm in length.

2. Components according to claim 1, **characterized in that** the fibres soften, melt or are decomposed at temperatures from 100 °C upwards, in particular in a temperature range of from 150 to 300 °C.

3. Components according to one of claims 1 or 2, **characterised in that** the fibres have a length of 8 to 20 mm.

4. The use of a high-strength concrete having a strength that goes beyond the maximum strength category B 55 covered in DIN 1045 for preventing destructive flaking in the event of a fire, in particular over the reinforcement, wherein said high-strength concrete contains:
- 2 to 6 % by weight, relative to its cement content, of a finely-divided, amorphous silicic acid having at least 90 % by weight SiO₂ or of a finely-divided, precipitated active silicate of magnesium, calcium, barium or aluminium having a BET surface area of 50 to 200 m²/g and a d_{50%} value of less than 20 µm; and
- 0.1 to 0.3% by volume polyolefin fibres capable of forming a capillary system by dissolving, softening, shrinking, decomposing or melting, said capillary system having substantially linear capillaries of 10 to 100 µm in diameter and 5 to 35 mm in length.

## Revendications

1. Eléments de construction en béton armé résistant à l'éclatement sous l'action de feu, en bétons à haute résistance mécanique qui ont une résistance mécanique allant au-delà de la classe maximale B 55 de résistance mécanique établie dans la norme DIN 1045, lesdits éléments contenant:
- 2 à 6 % en poids, par rapport à leur proportion de ciment, d'une silice amorphe en fines particules contentant au moins 90 % en poids de SiO₂ ou d'un silicate de magnésium, de calcium, de baryum ou d'aluminium actif précipité en fines particules, ayant une surface spécifique BET de 50 à 200 m²/g et une valeur d_{50%} infériuere a 20 µm; ainsi que
- 0,1 à 0,3 % en volume de fibres en polyoléfines qui peuvent former, par désaggrégation, ramollissement, contraction, décomposition ou fusion, un système de capillaires dont les capillaires principalement linéaires ont un diamètre de 10 à 100 µm et une longueur de 5 à 35 mm.

2. Eléments de construction suivant la revendication 1, **caractérisé en ce que** les fibres se ramollissent, fondent ou se décomposent à des températures à partir de 100 °C, notamment dans la plage de températures de 150 à 300 °C.

3. Elemérits de constuction suivant l'une des revendications 1 ou 2, **caractérisé en ce que** les fibres ont une longueur de 8 à 20 mm.

4. Utilisation d'un béton à haute résistance qui a une résistance mécanique allant au-delà de la classe maximale B 55 de résistance mécanique établie dans la norme DIN 1045 pour empêcher l'éclatement destructif en cas d'incendie, notamment sur l'armature, ledit béton contenant:
- 2 à 6 % en poids, par rapport à sa proportion de ciment, d'une silice amorphe en fines particules contentant au moins 90 % en poids de SiO₂ ou d'un silicate de magnésium, de calcium, de baryum ou d'aluminium actif précipité en fines particules, ayant une surface spécifique BET de 50 à 200 m²/g et une valeur d_{50%} infériuere a 20 µm; ainsi que
- 0,1 à 0,3 % en volume de fibres en polyoléfines qui peuvent former, par désaggrégation, ramollissement, contraction, décomposition ou fusion, un système de capillaires dont les capillaires principalement linéaires ont un diamètre de 10 à 100 µm et une longueur de 5 à 35 mm.
